# EUROPÄISCHE PATENTSCHRIFT

(11) **EP 2 607 200 B1**
(45) Veröffentlichungstag und Bekanntmachung des Hinweises auf die Patenterteilung: **30.07.2014**
(21) Anmeldenummer: 12198361.3
(22) Anmeldetag: 20.12.2012
(51) Int. Cl.: B62D 1/06, B60R 16/027

(54) **Anordnung mit zwei Fahrzeugbauteilen, insbesondere einer Lenksäule und einem Lenkrad, und Kraftfahrzeug mit einer Anordnung**
Assembly with two vehicle components, in particular a steering column and a steering wheel, and motor vehicle with such an assembly
Agencement comprenant deux composants de véhicule, notamment une colonne de direction et un volant, et véhicule automobile doté d'un agencement

(30) Priorität: 23.12.2011 DE 102011122342
(43) Veröffentlichungstag der Anmeldung: 26.06.2013
(73) Patentinhaber: Valeo Schalter und Sensoren GmbH, 74321 Bietigheim-Bissingen (DE)
(72) Erfinder: Staude, Sascha, 71638 Ludwigsburg (DE); Müller, Stefan, 97944 Boxberg (DE)

(56) Entgegenhaltungen:
- DE-A1-102009 053 926
- US-B1- 6 172 342

## Beschreibung

Die Erfindung betrifft eine Anordnung mit einem ersten Fahrzeugbauteil, insbesondere einer Lenksäule, und einem relativ zum ersten Fahrzeugbauteil drehbaren zweiten Fahrzeugbauteil, insbesondere einem Lenkrad, in und/oder an welchem zumindest ein elektrischer Verbraucher angeordnet ist, der über eine elektrische Versorgungsleitung mit elektrischer Energie aus dem ersten Fahrzeugbauteil versorgbar ist. Die Anordnung beinhaltet auch eine mit der Versorgungsleitung verbundene Schalteinheit, über welche der Verbraucher mit einer Spannungsquelle koppelbar und somit ein- und ausschaltbar ist. Die Erfindung betrifft außerdem ein Kraftfahrzeug mit einer derartigen Anordnung.

Die Erfindung geht von einem Gegenstand aus, wie er im Dokument DE 10 2009 053 926 A1 beschrieben ist. Aus diesem Dokument ist eine Anordnung mit einem Lenkrad und einer Lenksäule eines Kraftfahrzeugs bekannt, wobei in dem Lenkrad ein elektrischer Verbraucher - etwa eine Heizung - angeordnet ist. Der elektrische Verbraucher ist über Wickelbänder mit der Lenksäule verbunden und wird über die Wickelbänder mit elektrischer Spannung von Seiten der Lenksäule versorgt.

Im Stand der Technik wird der elektrische Verbraucher mittels einer Schalteinheit ein- und ausgeschaltet, weiche beispielsweise mehrere elektrische Schalter umfasst, etwa so genannte SmartMOSFETs. Die Schalteinheit wird auch als "Lasttreiberstufe" bezeichnet. Dabei ist es üblich, zwei solche Lasttreiberstufen für die Versorgung des elektrischen Verbrauchers vorzusehen, nämlich eine Lasttreiberstufe im Lenkrad und eine Lasttreiberstufe an der Lenksäule. Dies gilt grundsätzlich der Sicherheit: Bei einem fehlerhaften Zustand der lenkradseitigen Lasttreiberstufe im eingeschalteten Zustand des Verbrauchers kann der Stromfluss immer noch durch die lenksäulenseitige Lasttreiberstufe unterbrochen werden, und die Heizung kann ausgeschaltet werden. Eine solche Anordnung ist jedoch auch mit gewissen Nachteilen verbunden. Zum einen steht im Lenkrad relativ wenig Bauraum zur Verfugung, sodass durch die Integration der Lasttreiberstufe in das Lenkrad relativ viel Bauraum beansprucht wird und somit wenig Platz für andere Komponenten im Lenkrad zur Verfugung steht. Zum anderen müssen zwei separate Lasttreiberstufen im Lenkrad eingesetzt werden, wenn zwei elektrische Verbraucher im Lenkrad angeordnet sind. Dies ist beispielsweise dann der Fall, wenn im Lenkrad einerseits ein Heizelement und andererseits auch ein Vibrationsaktuator eines Spurhalteassistenten angeordnet sind. Der zur Verfügung stehende Bauraum wird außerdem dadurch verringert, dass zwischen der lenkradseitigen Lasttreiberstufe einerseits und der lenksäulenseitigen Lasttreiberstufe andererseits eine Kommunikationsverbindung bereitgestellt werden muss, weil die beidseitigen Schalter einer nach dem anderen geschlossen werden sollen und in der Lenksäule eine Information über den aktuellen Schaltzustand der lenkradseitigen Lasttreiberstufe vorliegen muss. Insgesamt ist die Verbindung zwischen den beidseitigen Lasttreiberstufen somit relativ aufwändig.

Aus der US 6,172,342 B1 ist bereits eine gattungsgemäße Anordnung zur Versorgung eine Lenkradheizung mit elektrischer Energie bekannt. Die bekannte Anordnung umfasst dabei eine an der Armaturentafel des Fahrzeugs angeordnete Kontrolleinheit mit einem Schaltelement, welches die Versorgungsleitung der Lenkradheizung ein- und ausschaltet.

Es ist Aufgabe der Erfindung, eine Lösung aufzuzeigen, wie bei einer Anordnung der eingangs genannten Gattung der Bauraum auf der Seite des zweiten Fahrzeugbauteils, insbesondere des Lenkrads, gespart werden kann.

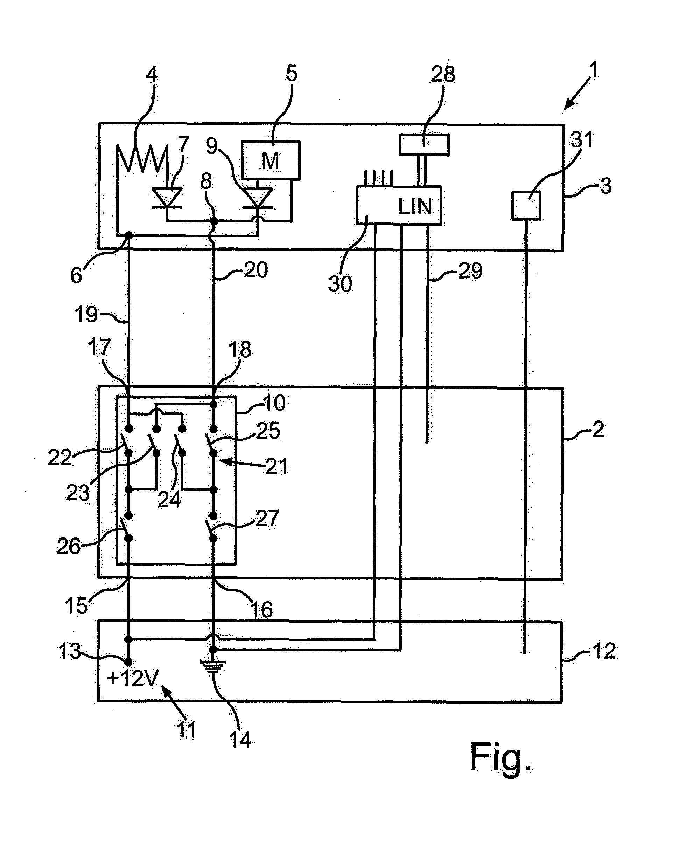

Diese Aufgabe wird erfindungsgemäß durch eine Anordnung sowie durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figur.

Eine erfindungsgemäße Anordnung weist ein erstes Fahrzeugbauteil, insbesondere eine Lenksäule, wie auch ein relativ zum ersten Fahrzeugbauteil drehbares zweites Fahrzeugbauteil auf, nämlich insbesondere ein Lenkrad. In und/oder an dem zweiten Fahrzeugbauteil ist zumindest ein elektrischer Verbraucher angeordnet, der über eine elektrische Versorgungsleitung - etwa ein Wickelband - mit elektrischer Energie aus dem ersten Fahrzeugbauteil versorgbar ist. Die Anordnung umfasst außerdem eine mit der Versorgungsleitung verbundene Schalteinheit, über weiche der Verbraucher mit einer Spannungsquelle koppelbar und somit ein- und ausschaltbar ist. Erfindungsgemäß ist vorgesehen, dass die Schalteinheit an dem ersten Fahrzeugbauteil (insbesondere der Lenksäule) angeordnet ist und das zweite Fahrzeugbauteil frei von Schaltelementen für das Ein- und Ausschalten des Verbrauchers ist.

Ein Grundgedanke der Erfindung besteht somit mit anderen Worten darin, die Anordnung derart auszugestatten, dass der im zweiten Fahrzeugbauteil angeordnete elektrische Verbraucher ausschließlich von Seiten des ersten Fahrzeugbauteils geschaltet wird. Somit sind alle Schaltelemente, die zum Ein- und Ausschalten des elektrischen Verbrauchers dienen, an dem ersten Fahrzeugbauteil angeordnet, während das zweite Fahrzeugbauteil frei von solchen Schaltelementen für diesen Verbraucher ist. Die erfindungsgemäße Anordnung hat den Vorteil, dass der Bauraum in dem zweiten Fahrzeugbauteil, insbesondere dem Lenkrad, im Vergleich zum Stand der Technik gespart werden kann und somit mehr Bauraum im zweiten Fahrzeugbauteil für andere Fahrzeugkomponenten zur Verfügung steht. Es entfällt nämlich eine Lasttreiberstufe (Schalteinheit) in dem zweiten Fahrzeugbauteil. Außerdem erübrigt sich somit auch der Einsatz einer Logikschaltung bzw. eines zusätzlichen Steuergeräts in dem zweiten Fahrzeugbauteil mit den damit verbundenen Nachteilen hinsichtlich der Kosten und des Bauraums. Es entfällt des Weiteren der Datenaustausch zwischen den beidseitigen Schalteinheiten und die damit notwendigen Bauteile, wie insbesondere ein Bustreiber, ein Mikrocontroller und dergleichen.

Die Versorgungsleitung ist bevorzugt durch ein Wickelband bzw. eine Wickelfeder gebildet. Somit kann eine zuverlässige elektrische Verbindung zwischen dem drehbaren Fahrzeugbauteil und dem ortsfesten Fahrzeugbauteil bereitgestellt werden. Die Erfindung ist jedoch nicht auf ein solches Wickelband beschränkt; es können auch beispielsweise Gleitkontakte oder dergleichen eingesetzt werden.

Erfindungsgemäß sind in dem zweiten Fahrzeugbauteil zumindest zwei elektrische Verbraucher angeordnet, die mit elektrischer Energie aus dem ersten Fahrzeugbauteil versorgt werden. Dies führt zu einer weiteren Einsparung des Bauraums im zweiten Fahrzeugbauteil, denn auch für den zweiten elektrischen Verbraucher erübrigt sich der Einsatz einer entsprechenden Schalteinheit im zweiten Fahrzeugbauteil.

Es erweist sich als besonders vorteilhaft, wenn die zumindest zwei Verbraucher über die gemeinsame Versorgungsleitung mit elektrischer Energie aus dem ersten Fahrzeugbauteil versorgt werden. Dies bedeutet, dass für die zumindest zwei Verbraucher eine gemeinsame Versorgungsleitung vorgesehen ist, die das erste Fahrzeugbauteil mit dem zweiten Fahrzeugbauteil elektrisch verbindet. Es erübrigt sich daher der Einsatz von zusätzlichen Versorgungsleitungen, sodass eine besonders kompakte Anordnung geschaffen wird. Für die zumindest zwei Verbraucher können insgesamt zwei gemeinsame Versorgungsleitungen vorgesehen sein, über welche die Verbraucher mit elektrischer Spannung versorgt werden, nämlich eine erste Versorgungsleitung für das positive elektrische Potential, wie auch eine zweite Versorgungsleitung für das elektrische Bezugspotential (Masse).

Es hat sich auch als vorteilhaft erwiesen, wenn auch die Schalteinheit eine für die zumindest zwei Verbraucher gemeinsame Schalteinheit ist, sodass die zumindest zwei Verbraucher über die gemeinsame Schalteinheit mit der Spannungsquelle koppelbar und somit ein- und ausschaltbar sind. Somit kann der Bauraum auch auf der Seite des ersten Fahrzeugbauteils gespart und die Anordnung noch kompakter gestaltet werden.

Die Schalteinheit weist zwei Eingangsanschlüsse auf; ein erster Eingangsanschluss kann mit einem positiven elektrischen Potential der Spannungsquelle verbunden sein, und ein zweiter Eingangsanschluss kann mit einem elektrischen Bezugspotential verbunden sein. Dann liegt zwischen dem ersten und dem zweiten Eingangsanschluss eine elektrische Spannung der Spannungsquelle an. Die Schalteinheit weistaußerdem einen ersten und einen zweiten Ausgangsanschluss auf, die beide mit den zumindest zwei elektrischen Verbrauchern elektrisch gekoppelt sind. Die Schalteinheit ist so ausgebildet, dass die Polarität einer zwischen den beiden Ausgangsanschlüssen ausgegebenen Ausgangsspannung gewechselt werden kann. Dies kann beispielsweise so aussehen, dass bei einer ersten Polarität der Ausgangsspannung ein erster Verbraucher und bei einer zweiten Polarität der Ausgangsspannung ein zweiter Verbraucher versorgt wird. Es wird somit ermöglicht, dass über eine und dieselbe Schalteinheit die zumindest zwei Verbraucher - vorzugsweise wahlweise - mit elektrischer Energie versorgt werden können. Bevorzugt umfasst die Schalteinheit eine Vollbrückenschaltung mit elektrischen Schaltern. Diese Ausführungsform kann ohne viel Aufwand realisiert werden, und der Wechsel der Polarität der Ausgangsspannung kann zuverlässig erfolgen.

Die Schalteinheit kann folgende Schalter beinhalten:
- einen ersten elektrischen Schalter, über welchen der erste Eingangsanschluss mit dem ersten Ausgangsanschluss koppelbar ist,
- einen zweiten elektrischen Schalter, über welchen der erste Eingangsanschluss mit dem zweiten Ausgangsanschluss koppelbar ist,
- einen dritten elektrischen Schalter, über welchen der zweite Eingangsanschluss mit dem ersten Ausgangsanschluss koppelbar ist, und
- einen vierten elektrischen Schalter, über welchen der zweite Eingangsanschluss mit dem zweiten Ausgangsanschluss koppelbar ist.

Mit lediglich vier elektrischen Schaltern kann somit auf technisch einfache Weise ermöglicht werden, dass die Polarität der Ausgangsspannung zwischen den beiden

Ausgangsanschlüssen der Schalteinheit gewechselt werden kann bzw. die Ausgangsspannung umgepolt werden kann.

Es kann vorgesehen sein, dass zumindest einer der Schalter mit einem Sicherheitsschalter in Reihe geschaltet ist. Somit wird eine doppelte Sicherheit zum Beispiel im Falle einer geforderten sicherheitsbedihgten Abschaltung erreicht, indem sich zwei Schalter in Reihe befinden. Sollte sich einer der Schalter nicht mehr öffnen lassen, so kann stets noch der andere Schalter geöffnet werden, um den Stromfluss zu unterbrechen. Selbst bei einem "klebenden" Schalter ist stets die Möglichkeit gegeben, den elektrischen Verbraucher abzuschalten.

Wie bereits ausgeführt, kann die Polarität der Ausgangsspannung der Schalteinheit gewechselt werden. Um nun die Versorgung (wahlweise) der zumindest zwei Verbraucher zu ermöglichen, kann eine Stromsperreinrichtung vorgesehen sein, die beispielsweise durch Dioden realisiert werden kann. Diese Stromsperreinrichtung kann derart ausgebildet sein, dass bei einer ersten Polarität der Ausgangsspannung ausschließlich einer der Verbraucher und bei einer zweiten Polarität ausschließlich der andere Verbraucher mit der Ausgangsspannung versorgt wird. Auf diesem Wege gelingt es, wahlweise einen der Verbraucher oder aber den anderen Verbraucher mit elektrischer Energie zu versorgen und somit zu aktivieren. Dabei kann den elektrischen Verbrauchern jeweils eine Diode zugeordnet sein, welche den elektrischen Stromfluss lediglich in eine Richtung zulässt und in die andere Richtung sperrt.

Die zumindest zwei Verbraucher können zum Beispiel folgende Verbraucher umfassen: zumindest ein Heizelement zum Beheizen des zweiten Fahrzeugbauteils und/oder zumindest einen Schwingungsaktuator eines Spurhalteassistenten.

In einer Ausführungsform ist vorgesehen, dass an dem ersten Fahrzeugbauteil eine, insbesondere in die Schalteinheit integrierte, Diagnoseeinrichtung angeordnet ist, welche zum Erfassen eines durch die Versorgungsleitung fließenden Stroms und/oder einer Temperatur der Versorgungsleitung ausgebildet ist. Somit kann der Zustand der Versorgungsleitung überprüft werden, und der elektrische Verbraucher kann gegebenenfalls abgeschaltet werden, nämlich insbesondere dann, wenn die Stromstärke des Stroms und/oder die Temperatur einen vorgegebenen Grenzwert überschreitet/n.

Ein erfindungsgemäßes Kraftfahrzeug beinhaltet eine erfindungsgemäße Anordnung.

Weitere Merkmale der Erfindung ergeben sich aus den Ansprüchen, der Figur und der Figurenbeschreibung. Alle vorstehend in der Beschreibung genannten Merkmale und Merkmalskombinationen sowie die nachfolgend in der Figurenbeschreibung genannten und/oder in der Figur alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels, wie auch unter Bezugnahme auf die beigefügte Zeichnung naher erläutert, Dabei veranschaulicht die einzige Figur in schematischer Darstellung ein Blockschaltbild einer Anordnung gemäß einer Ausfünrungsform der Erfindung.

Eine in der Figur dargestellte Anordnung 1 beinhaltet ein erstes Fahrzeugbauteil, nämlich eine Lenksäule, in welche ein Lenksäulenmodul 2 integriert ist Die Anordnung 1 weist außerdem ein Lenkrad 3 auf, weiches ein zweites Fahrzeugbauteil ist. In herkömmlicher Weise kann das Lenkrad 3 relativ zur Lenksäule gedreht werden.

Im Lenkrad 3 sind zwei elektrische Verbraucher angeordnet, nämlich ein Heizelement 4 zum Beheizen des Lenkrads 3 sowie ein Schwingungsaktuator 5, weicher zum Erzeugen einer mechanischen Schwingung bzw. als Vibrator ausgebildet ist. Der Schwingungsaktuator 5 ist Bestandteil eines Spurhalteassistenten des Kraftfahrzeugs. Das Heizelement 4 ist einerseits mit einem Schaltungsknoten 6 elektrisch verbunden; andererseits ist das Heizelement 4 über eine Diode 7 mit einem weiteren Knoten 8 elektrisch gekoppelt. Dabei ist das Heizelement 4 mit der Anode der Diode 7 verbunden, während die Kathode der Diode 7 mit dem Knoten 8 verbunden ist. Der Schwingungsaktuator 5 ist auch einerseits mit dem Knoten 6 gekoppelt, und zwar über eine zweite Diode 9; andererseits ist der Schwingungsaktuator 5 mit dem Knoten 8 direkt verbunden. Dabei ist der Schwingungsaktuator 5 mit der Anode der zweiten Diode 9 verbunden, während die Kathode der zweiten Diode 9 mit dem Knoten 6 verbunden ist. Die beiden Dioden 7, 9 bilden insgesamt eine Stromsperreinnchtung, deren Funktion weiter unten näher erläutert wird.

Das Lenksäulenmodul 2 beinhaltet eine Schalteinheit 10, welche als integriertes Bauteil ausgebildet ist und eine Vielzahl von Schaltern umfasst (zum Beispiel SmartMOSFET). Die Schalteinheit 10 dient zum Ein- und Ausschalten der beiden Verbraucher 4, 5. Über die Schalteinheit 10 können die Verbraucher 4, 5 mit einer elektrischen Spannungsquelle 11 gekoppelt werden, die in einem Bordnetz 12 des Kraftfahrzeugs angeordnet ist. Beispielsweise stellt die Spannungsquelle 11 eine elektrische Spannung von 12V bereit. Es handelt sich hier um eine Gleichspannung, die beispielsweise mittels einer Fahrzeugbatterie erzeugt wird. Dabei ist einerseits ein Anschluss 13 bereitgestellt, an welchem ein positives elektrisches Potential von 12V bereitgestellt ist; andererseits ist ein Bezugspotentfal 14 vorhanden, nämlich Masse. Die elektrische Spannung von 12V liegt also zwischen dem Anschluss 13 und dem Bezugspotential 14.

Die Schalteinheit 10 weist einen ersten und einen zweiten Eingangsanschluss 15, 16 auf. Der erste Eingangsanschtuss 15 ist mit dem positiven Potential von 12V verbunden, während der zweite Eingangsanschluss 16 mit dem Bezugspotential 14 gekoppelt ist. Entsprechend weist die Schalteinheit 10 auch einen ersten und einen zweiten Ausgangsanschluss 17, 18 auf, zwischen denen eine Ausgangsspannung der Schalteinheit 10 ausgegeben werden kann. Der erste Ausgangsanschluss 17 ist über eine erste Versorgungsleitung 19 mit dem Knoten 6 verbunden, während der zweite Ausgangsanschluss 18 über eine zweite Versorgungsleitung 20 mit dem Knoten 8 elektrisch verbunden ist. Die Versorgungsleitungen 19, 20 können durch jeweilige Wickelbänder bzw. Wickelfedern gebildet sein, welche die beiden Verbraucher 4, 5 einerseits mit dem Lenksäulenmodul 2 andererseits elektrisch verbinden.

Die Schalteinheit 10 ist so ausgebildet, dass die zwischen den Ausgangsanschlüssen 17, 18 anliegende Ausgangsspannung umgepolt werden kann. Zu diesem Zwecke beinhaltet die Schalteinheit 10 eine Vollbrückenschaltung 21 aus einer Vielzahl von elektrischen Schaltern. Und zwar beinhaltet die Schalteinheit 10 einen ersten Schalter 22, über welchen der erste Eingangsanschluss 15 mit dem ersten Ausgangsanschluss 17 koppelbar ist. Über einen zweiten Schalter 23 ist der erste Eingangsanschluss 15 mit dem zweiten Ausgangsanschluss 18 koppelbar, Der zweite Eingangsanschluss 16 ist wiederum über einen dritten Schalter 24 mit dem ersten Ausgangsanschluss 17 sowie über einen vierten Schalter 25 mit dem zweiten Ausgangsanschluss 18 koppelbar. Die Schalter 22 bis 25 können paarweise betätigt werden, und zwar derart, dass entweder die äußeren Schalter 22, 25 oder aber die inneren Schalter 23, 24 geschlossen werden. Werden die äußeren Schalter 22, 25 geschlossen, so liegt am ersten Ausgangsanschluss 17 das positive Potential von 12V gegenüber dem zweiten Ausgangsanschluss 18 an. Werden hingegen die inneren Schalter 23, 24 geschlossen, so wechselt die Polarität der Ausgangsspannung, und der erste Ausgangsanschluss 17 ist mit dem Bezugspotential 14 verbunden, während der zweite Ausgangsanschluss 18 mit dem positiven Potential verbunden ist.

Die Schalter 22 bis 25 sind außerdem paarweise mit jeweils einem Sicherheitsschalter 26, 27 in Reihe geschaltet. Und zwar sind die Schalter 22, 23 mit dem ersten Sicherheitsschalter 26 in Serie geschaltet, und die Schalter 24, 25 sind mit dem zweiten Sicherheitsschalter 27 in Reihe geschaltet. Die Sicherheitsschalter 26, 27 haben die Funktion, dass die elektrischen Verbraucher 4, 5 gegebenenfalls bei einem Fehler der Schalter 22 bis 25 abgeschaltet werden können, nämlich beispielsweise dann, wenn ein fehlerhafter Zustand erkannt wird. Können also die Schalter 22 bis 25 nicht geöffnet werden, so kann der Stromfluss immer noch mittels der Sicherheitsschalter 26, 27 unterbrochen werden.

In das Lenkrad 3 kann auch ein Temperatursensor 28 - etwa ein PTC-Element - integriert sein, mittels welchem die Temperatur des Lenkrads 3 gemessen wird. Die Messwerte für die Temperatur können dann über einen LIN-Bus 29 an das Lenksäulenmodul 2 übermittelt werden. Im Lenksäulenmodul 2 ist somit die jeweils aktuelle Temperatur des Lenkrads 3 bekannt, sodass auch die Temperatur geregelt werden kann. Es erfolgt also eine Regelung der Temperatur des Lenkrads 3, nämlich durch entsprechende Ansteuerung des Heizelements 4. Um die Datenübertragung zu ermöglichen, kann das Lenkrad 3 auch einen LIN-Controller 30 beinhalten, welcher die Kommunikation mit dem Lenksäulenmodul 2 durchführt. Dieser LIN-Controller 30 kann auch mit der Spannungsquelle 11 verbunden sein.

In der Figur ist außerdem ein Airbag 31 schematisch dargestellt, welches in das Lenkrad 3 integriert ist.

In dem Lenksäulenmodul 2 kann außerdem eine Diagnoseeinrichtung vorgesehen sein (in der Figur nicht dargestellt), welche zur Erfassung der Temperatur der Versorgungsleitungen 19, 20 und/oder zur Erfassung der Stromstärke eines durch die Versorgungsleitungen 19, 20 fließenden Stroms ausgebildet ist. Diese Diagnoseeinnchtung kann beispielsweise in die Schalteinheit 10 integriert oder aber eine von der Schalteinheit 10 separate Komponente sein. Diese Vorgehensweise hat den Vorteil, dass bei einer unzulässigen Stromstärke bzw. Temperatur die elektrischen Verbraucher 4, 5 abgeschaltet werden können.

Wie bereits ausgeführt, kann die Ausgangsspannung zwischen den Ausgangsanschlüssen 17,18 umgepolt werden. Bei der ersten Polarität der Ausgangsspannung wird das Heizelement 4 mit elektrischer Energie versorgt, während bei der zweiten Polarität der Spannung der Schwingungsaktuator 5 versorgt wird. Dies bedeutet, dass die Verbraucher 4, 5 wahlweise in Betrieb genommen werden können. Dies ist deshalb möglich, weil die Dioden 7, 9 die gleichzeitige Inbetriebnahme der Verbraucher 4, 5 verhindern. Alternativ kann jedoch auf die Dioden 7, 9 auch verzichtet werden. Dies erweist sich insbesondere dann als vorteilhaft, wenn ein gleichzeitiger Betrieb der elektrischen Verbraucher 4, 5 erwünscht ist.

Optional können im Lenksäulenmodul 2 auch zwei separate Schalteinheiten 10 bereitgestellt sein, nämlich eine erste Schalteinheit für den ersten Verbraucher 4 sowie eine separate zweite Schalteinheit für den zweiten Verbraucher 5. Im Hinblick auf eine kompakte Anordnung 1 erweist es sich jedoch als vorteilhaft, wenn eine gemeinsame Schalteinheit 10 für beide Verbraucher 4, 5 eingesetzt wird.

## Patentansprüche

1. Anordnung (1) mit einem ersten Fahrzeugbauteil, insbesondere einer Lenksäule, und einem relativ zum ersten Fahrzeugbauteil drehbaren zweiten Fahrzeugbauteil (3), insbesondere einem Lenkrad, in und/oder an welchem zumindest ein elektrischer Verbraucher (4, 5) angeordnet ist, der über eine elektrische Versorgungsleitung (19, 20) mit elektrischer Energie aus dem ersten Fahrzeugbauteil versorgbar ist, und mit einer mit der Versorgungsleitung (19, 20) verbundenen Schalteinheit (10), über welche der Verbraucher (4, 5) mit einer Spannungsquelle (11) koppelbar und somit ein- und ausschaltbar ist, wobei die Schalteinheit (10) an dem ersten Fahrzeugbauteil angeordnet ist und das zweite Fahrzeugbauteil (3) frei von Schaltelementen für das Ein- und Ausschalten des Verbrauchers (4, 5) ist, wobei in dem zweiten Fahrzeugbauteil (3) zumindest zwei elektrische Verbraucher (4, 5) angeordnet sind und wobei ein erster Eingangsanschluss (15) der Schalteinheit (10) mit einem positiven elektrischen Potential (13) der Spannungsquelle (11) und ein zweiter Eingangsanschluss (16) mit einem elektrischen Bezugspotential (14) verbunden ist, so dass zwischen dem ersten und dem zweiten Eingangsanschluss (15, 16) eine elektrische Spannung der Spannungsquelle (11) anliegt,
**dadurch gekennzeichnet, dass**
die Schalteinheit (10) einen ersten und einen zweiten Ausgangsanschluss (17, 18) aufweist, die beide mit den elektrischen Verbrauchern (4, 5) elektrisch gekoppelt sind, wobei die Schalteinheit (10) dazu ausgelegt ist, die Polarität einer zwischen den Ausgangsanschlüssen (17, 18) ausgegebenen Ausgangsspannung zu wechseln.

2. Anordnung (1) nach Anspruch 1,
**dadurch gekennzeichnet, dass**
die Versorgungsleitung (19, 20) durch ein Wickelband gebildet ist.

3. Anordnung (1) nach Anspruch 2,
**dadurch gekennzeichnet, dass**
die zumindest zwei Verbraucher (4, 5) über die gemeinsame Versorgungsleitung (19, 20) mit elektrischer Energie aus dem ersten Fahrzeugbauteil versorgbar sind.

4. Anordnung (1) nach Anspruch 2 oder 3,
**dadurch gekennzeichnet, dass**
über die gemeinsame Schalteinheit (10) die zumindest zwei Verbraucher (4, 5) mit der Spannungsquelle (11) koppelbar und somit ein- und ausschaltbar sind.

5. Anordnung (1) nach Anspruch 1,
**dadurch gekennzeichnet, dass**
die Schalteinheit (10) eine Vollbrückenschaltung mit elektrischen Schaltern (22 bis 25) umfasst.

6. Anordnung (1) nach Anspruch 1 oder 5,
**dadurch gekennzeichnet, dass**
die Schalteinheit (10) umfasst:
- einen ersten elektrischen Schalter (22), über welchen der erste Eingangsanschluss (15) mit dem ersten Ausgangsanschluss (17) koppelbar ist,
- einen zweiten elektrischen Schalter (23), über welchen der erste Eingangsanschluss (15) mit dem zweiten Ausgangsanschluss (18) koppelbar ist,
- einen dritten elektrischen Schalter (24), über welchen der zweite Eingangsanschluss (16) mit dem ersten Ausgangsanschluss (17) koppelbar ist, und
- einen vierten elektrischen Schalter (25), über welchen der zweite Eingangsanschiuss (16) mit dem zweiten Ausgangsanschluss (18) koppelbar ist.

7. Anordnung (1) nach Anspruch 6,
**dadurch gekennzeichnet, dass**
zumindest einer der Schalter mit einem Sicherheitsschalter (26, 27) in Reihe geschaltet ist.

8. Anordnung (1) nach einem der Ansprüche 1 oder 5 bis 7,
**gekennzeichnet durch**
eine Stromsperreinrichtung (7, 9), weiche derart ausgebildet ist, dass bei einer ersten Polarität der Ausgangsspannung ausschließlich einer der Verbraucher (4, 5) und bei einer zweiten Polarität ausschließlich der andere Verbraucher (4, 5) mit der Ausgangsspannung versorgbar ist.

9. Anordnung (1) nach einem der Ansprüche 1 oder 3 bis 8,
**dadurch gekennzeichnet, dass**
- einer der Verbraucher (4, 5) ein Heizelement (4) für das zweite Fahrzeugbauteil (3) ist und/oder
- einer der Verbraucher (4, 5) ein Schwingungsaktuator (5) eines Spurhalteassistenten ist.

10. Anordnung (1) nach einem der vorhergehenden Ansprüche,
**dadurch gekennzeichnet, dass**
an dem ersten Fahrzeugbauteil eine, insbesondere in die Schalteinheit (10) integrierte, Diagnoseeinrichtung angeordnet ist, welche zum Erfassen eines durch die Versorgungsleitung (19, 20) fließenden Stromes und/oder einer Temperatur der Versorgungsleitung (19, 20) ausgebildet ist.

11. Kraftfahrzeug mit einer Anordnung (1) nach einem der Ansprüche 1 bis 10.

## Claims

1. Arrangement (1) comprising a first vehicle component, in particular a steering column, and a second vehicle component (3), in particular a steering wheel, which can rotate in relation to the first vehicle component and in and/or on which at least one electrical load (4, 5) is arranged, it being possible for the said electrical load to be supplied with electrical energy from the first vehicle component via an electrical supply line (19, 20), and comprising a switching unit (10) which is connected to the supply line (19, 20) and by means of which the load (4, 5) can be coupled to a voltage source (11) and therefore can be switched on and switched off, wherein the switching unit (10) is arranged on the first vehicle component, and the second vehicle component (3) is free of switching elements for switching on and switching off the load (4, 5), wherein at least two electrical loads (4, 5) are arranged in the second vehicle component (3), and wherein a first input connection (15) of the switching unit (10) is connected to a positive electrical potential (13) of the voltage source (11), and a second input connection (16) is connected to an electrical reference potential (14), with the result that an electrical voltage of the voltage source (11) is applied between the first and the second input connection (15, 16), **characterized in that** the switching unit (10) has a first and a second output connection (17, 18), the said two output connections being electrically coupled to the electrical loads (4, 5), wherein the switching unit (10) is designed to change the polarity of an output voltage which is output between the output connections (17, 18).

2. Arrangement (1) according to Claim 1, **characterized in that** the supply line (19, 20) is formed by a wound tape.

3. Arrangement (1) according to Claim 2, **characterized in that** the at least two loads (4, 5) can be supplied with electrical energy from the first vehicle component via the common supply line (19, 20).

4. Arrangement (1) according to Claim 2 or 3, **characterized in that** the at least two loads (4, 5) can be coupled to the voltage source (11), and therefore can be switched on and switched off, by means of the common switching unit (10).

5. Arrangement (1) according to Claim 1, **characterized in that** the switching unit (10) comprises a full-bridge circuit comprising electrical switches (22 to 25).

6. Arrangement (1) according to Claim 1 or 5, **characterized in that** the switching unit (10) comprises:
- a first electrical switch (22) by means of which the first input connection (15) can be coupled to the first output connection (17),
- a second electrical switch (23) by means of which the first input connection (15) can be coupled to the second output connection (18),
- a third electrical switch (24) by means of which the second input connection (16) can be coupled to the first output connection (17), and
- a fourth electrical switch (25) by means of which the second input connection (16) can be coupled to the second output connection (18).

7. Arrangement (1) according to Claim 6, **characterized in that** at least one of the switches is connected in series with a safety switch (26, 27).

8. Arrangement (1) according to one of Claims 1 or 5 to 7, **characterized by** a current blocking device (7, 9) which is designed in such a way that only one of the loads (4, 5) can be supplied with the output voltage given a first polarity of the output voltage, and only the other load (4, 5) can be supplied with the output voltage given a second polarity.

9. Arrangement (1) according to one of Claims 1 or 3 to 8, **characterized in that**
- one of the loads (4, 5) is a heating element (4) for the second vehicle component (3), and/or
- one of the loads (4, 5) is a vibration actuator (5) of a lane-keeping assistant.

10. Arrangement (1) according to one of the preceding claims, **characterized in that** a diagnosis device, in particular which is integrated into the switching unit (10), is arranged on the first vehicle component, the said diagnosis device being designed to detect a current which flows through the supply line (19, 20) and/or a temperature of the supply line (19, 20).

11. Motor vehicle comprising an arrangement (1) according to one of Claims 1 to 10.

## Revendications

1. Arrangement (1) comprenant un premier composant de véhicule, notamment une colonne de direction, et un deuxième composant de véhicule (3) qui peut tourner par rapport au premier composant de véhicule, notamment un volant de direction, dans et/ou sur lequel est disposé au moins un appareil électrique (4, 5), lequel peut être alimenté en énergie électrique depuis le premier composant de véhicule par le biais d'une ligne d'alimentation électrique (19, 20), et comprenant une unité de commutation (10) reliée avec la ligne d'alimentation (19, 20), par le biais de laquelle l'appareil (4, 5) peut être connecté avec une source de tension (11) et peut ainsi être mis sous tension et hors tension, l'unité de commutation (10) étant disposée sur le premier composant de véhicule et le deuxième composant de véhicule (3) étant dépourvu d'éléments de commutation pour la mise sous tension et hors tension de l'appareil (4, 5), au moins deux appareils électriques (4, 5) étant disposés dans le deuxième composant de véhicule (3) et une première borne d'entrée (15) de l'unité de commutation (10) étant reliée avec un potentiel électrique positif (13) de la source de tension (11) et une deuxième borne d'entrée (16) étant reliée avec un potentiel de référence électrique (14), de sorte qu'une tension électrique de la source de tension (11) soit appliquée entre les première et deuxième bornes d'entrée (15, 16),
**caractérisé en ce que**
l'unité de commutation (10) présente une première et une deuxième borne de sortie (17, 18), lesquelles sont toutes deux connectées électriquement avec les appareils électriques (4, 5), l'unité de commutation (10) étant conçue pour changer la polarité d'une tension de sortie délivrée entre les bornes de sortie (17, 18).

2. Arrangement (1) selon la revendication 1, **caractérisé en ce que** la ligne d'alimentation (19, 20) est formée par une bande bobinée.

3. Arrangement (1) selon la revendication 2, **caractérisé en ce que** les au moins deux appareils (4, 5) peuvent être alimentés en énergie électrique depuis le premier composant de véhicule par le biais de la ligne d'alimentation (19, 20) commune.

4. Arrangement (1) selon la revendication 2 ou 3, **caractérisé en ce que** les au moins deux appareils (4, 5) peuvent être connectés avec la source de tension (11) par le biais de l'unité de commutation (10) et peuvent ainsi être mis sous tension et hors tension.

5. Arrangement (1) selon la revendication 1, **caractérisé en ce que** l'unité de commutation (10) comprend un circuit en pont intégral muni de commutateurs électriques (22 à 25).

6. Arrangement (1) selon la revendication 1 ou 5, **caractérisé en ce que** l'unité de commutation (10) comprend :
- un premier commutateur électrique (22) par le biais duquel la première borne d'entrée (15) peut être connectée avec la première borne de sortie (17),
- un deuxième commutateur électrique (23) par le biais duquel la première borne d'entrée (15) peut être connectée avec la deuxième borne de sortie (18),
- un troisième commutateur électrique (24) par le biais duquel la deuxième borne d'entrée (16) peut être connectée avec la première borne de sortie (17),
- un quatrième commutateur électrique (25) par le biais duquel la deuxième borne d'entrée (16) peut être connectée avec la deuxième borne de sortie (18).

7. Arrangement (1) selon la revendication 6, **caractérisé en ce qu'**au moins l'un des commutateurs est branché en série avec un commutateur de sécurité (26, 27) .

8. Arrangement (1) selon l'une des revendications 1 ou 5 à 7, **caractérisé par** un dispositif de blocage du courant (7, 9) qui est configuré de telle sorte qu'en présence d'une première polarité de la tension de sortie, uniquement l'un des appareils (4, 5) peut être alimenté avec la tension de sortie, et en présence d'une deuxième polarité, uniquement l'autre appareil (4, 5) peut être alimenté avec la tension de sortie.

9. Arrangement (1) selon l'une des revendications 1 ou 3 à 8, **caractérisé en ce que**
- l'un des appareils (4, 5) est un élément chauffant (4) pour le deuxième composant de véhicule (3) et/ou
- l'un des appareils (4, 5) est un actionneur vibrant (5) d'un assistant au maintien de la trajectoire.

10. Arrangement (1) selon l'une des revendications précédentes, **caractérisé en ce que** sur le premier composant de véhicule est disposé un dispositif de diagnostic, notamment intégré dans l'unité de commutation (10), lequel est configuré pour détecter un courant qui circule à travers la ligne d'alimentation (19, 20) et/ou une température de la ligne d'alimentation (19, 20).

11. Véhicule automobile équipé d'un arrangement (1) selon l'une des revendications 1 à 10.
